**Europäisches Patentamt**

**European Patent Office**

**Office européen des brevets**

(11) Numéro de publication : **0 312 441 B1**

(19)

(12) **FASCICULE DE BREVET EUROPEEN**

(45) Date de publication du fascicule du brevet :
**18.03.92 Bulletin 92/12**

(51) Int. Cl.⁵ : **C03B 27/00, C03B 27/04, C03B 23/03, C03B 40/00**

(21) Numéro de dépôt : **88402562.8**

(22) Date de dépôt : **11.10.88**

(54) **Amélioration de la trempe du verre.**

(30) Priorité : **14.10.87 FR 8714185**

(43) Date de publication de la demande :
**19.04.89 Bulletin 89/16**

(45) Mention de la délivrance du brevet :
**18.03.92 Bulletin 92/12**

(84) Etats contractants désignés :
**AT BE CH DE ES FR GB IT LI LU NL SE**

(56) Documents cités :
**FR-A- 1 459 549
GB-A- 1 158 360
GB-A- 2 188 045
US-A- 3 694 182
US-A- 3 973 943
US-A- 4 556 408**

(73) Titulaire : **SAINT-GOBAIN VITRAGE INTERNATIONAL
18, avenue d'Alsace
F-92400 Courbevoie (FR)**

(72) Inventeur : **D'Iribarne, Benoit
Am Pannhaus 7
W-5100 Aachen (DE)**
Inventeur : **Houang, Paul
463, avenue Rouxinol Ap . 124
04515 Sao Paolo SP (BR)**
Inventeur : **Mairlot, Henri
218, rue du Bois de L'Orvée Chatelet
B-6300 Acoz (BE)**

(74) Mandataire : **Leconte, Jean-Gérard et al
Saint-Gobain Recherche 39, Quai Lucien Lefranc
F-93304 Aubervilliers Cedex (FR)**

**Description**

La présente invention concerne la trempe de plaques de verre, éventuellement accompagnée de leur bombage et elle s'applique plus particulièrement au procédé de trempe dit par contact.

Il est connu par le brevet japonais n° 39-1029 d'intercaler entre le verre et les plaques de refroidissement d'un dispositif de trempe par contact un matériau ayant un rôle de tampon mécanique et thermique. Les matériaux proposés : tissu imprégné d'huile de silicone ou graisse, toile de verre ne donnent cependant pas satisfaction car ils réagissent chimiquement avec le verre (silicone) ou sont trop fragiles et sont de ce fait incompatibles avec un emploi industriel. On propose également comme autre matériau tampon, une feuille métallique fine et flexible par exemple en plomb. Outre l'inadaptation des caractéristiques thermiques d'une telle feuille métallique pour la trempe du verre, on peut indiquer aussi la possible difficulté pour appliquer exactement cette feuille métallique sur des plaques de refroidissement ayant des formes complexes non développables.

On signale en outre dans ce brevet antérieur JP 39-1029, pour tremper du verre par contact, l'essai non concluant d'emploi de mèches des fils métalliques, ces fils métalliques d'une part étant difficiles à mettre en oeuvre, d'autre part endommageant la surface du verre.

La présente invention vise à résoudre le problème de la trempe du verre, par le procédé dit par contact, en proposant des matériaux destinés à être intercalés entre les plaques de refroidissement de l'installation de trempe par contact et le verre.

Il importe que ces matériaux proposés n'aient pas les inconvénients des matériaux essayés antérieurement. Ainsi ils doivent présenter une inertie chimique vis à vis du verre et de ses éventuels revêtements (émail notamment), ils ne doivent pas blesser le verre et/ou ses revêtements et doivent avoir une planéité qui préserve la qualité optique du verre. Ils doivent également être capables d'une bonne déformabilité pour s'adapter à des formes complexes, en particulier non développables, susceptibles d'être donnés au verre ou que peut déjà posséder le verre. En outre, pour permettre une trempe autorisant l'emploi des vitrages ainsi fabriqués comme vitrages automobiles (respect du règlement n° 43 de l'Accord des Nations Unies concernant l'adoption de conditions uniformes d'homologation et la reconnaissance réciproque de l'homogation des équipements et pièces de véhicules à moteur), ils doivent posséder une résistance thermique appropriée, et pour être employés industriellement ils doivent posséder une bonne résistance mécanique et une durabilité autorisant un nombre important de cycles thermiques d'environ 150° à 650°C en un temps bref (plusieurs centaines de cycles de 10 secondes environ).

La présente invention propose pour cela une installation de trempe et éventuellement de bombage simultané par contact de feuilles de verre de 1 à 10 mm d'épaisseur dans laquelle les plaques de refroidissement sont recouvertes d'un tampon dont la surface directement en contact avec le verre est formée d'une couche présentant une résistance thermique comprise entre environ $0,25 \times 10^{-3}$ et $10^{-2}$ $M^2$ $KW^{-1}$ et faite de fils d'un diamètre inférieur à 50 microns et de préférence inférieur à 15 microns, dont certains au moins sont métalliques, et les autres le cas échéant sont des fils de carbone.

De préférence cette résistance thermique est comprise entre $0,25 \times 10^{-3}$ et $2,5 \times 10^{-3}$ $M^2$ $KW^{-1}$. Plus précisément, pour du verre à tremper par contact, de l'ordre de 3 à 4 mm d'épaisseur, la résistance thermique du matériau préconisé est de l'ordre de $10^{-3}$ à $1,5.10^{-3}$ $M^2$ $KW^{-1}$.

Ces fils minces sont arrangés en mèches qui sont tissées, tricotées, entrecroisées ou frittées.

L'invention a également pour objet l'application de ladite installation à la trempe de feuilles de verre en vue de leur utilisation en tant que vitrages automobiles, satisfaisant le règlement 43 des Nations Unies.

L'invention sera maintenant décrite plus en détail en référence aux figures jointes qui représentent :

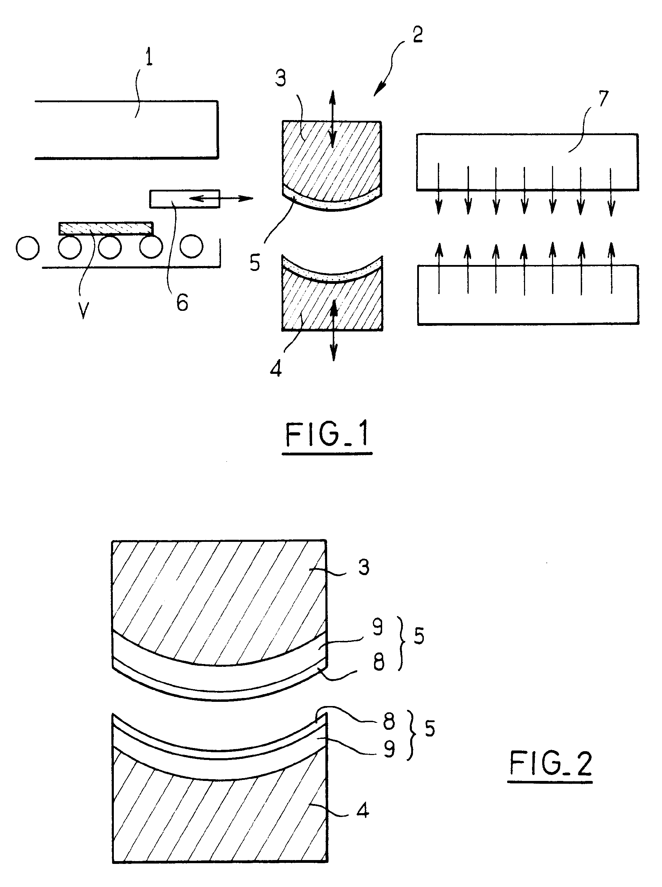

. **figure 1** : un schéma d'une installation de trempe et éventuellement bombage de feuilles de verre par le procédé dit par contact,

. **figure 2** : un schéma de la structure d'un tampon intercalé entre les plaques de refroidissement d'une installation de trempe par contact et le verre,

La figure 1 donne le schéma général d'une installation de trempe et éventuellement bombage de feuilles de verre par le procédé dit par contact. Une telle installation comprend essentiellement un four 1 de chauffage des feuilles de verre V à traiter à une température supérieure à la température de transformation du verre, soit une température de l'ordre de 600 à 650° C, un poste 2 de trempe et éventuellement bombage simultané ayant essentiellement deux plaques de refroidissement 3 et 4 en regard l'une de l'autre, mobiles l'une par rapport à l'autre de façon à pouvoir s'appliquer contre les feuilles de verre V dans une étape pour les tremper et éventuellement les bomber, à pouvoir s'écarter l'une de l'autre dans une autre étape pour permettre l'évacuation de la feuille de verre traitée et l'admission de la feuille de verre suivante à traiter, et également un moyen 6 de support et de transport des feuilles de verre du four 1 au poste 2 de trempe et éventuellement de bombage simultané. Avantageusement, le poste 2 de trempe et éventuellement de bombage simultané, est suivi d'un poste 7 de refroidissement secondaire, dans lequel les feuilles de verre dont les contraintes ont été figées par contact avec les plaques de refroidissement 3 et 4, vont terminer leur refroidissement, libérant ainsi rapidement les plaques 3 et 4 pour la trempe et éventuelle le bombage des autres feuilles de verre.

Le moyen 6 de support et de transport des feuilles de verre est un convoyeur à rouleaux et/ou à coussin gazeux, ou en élément supérieur de transfert à dépression déplaçable sur des rails non représentés, ou encore un autre système équivalent.

Les plaques de refroidissement 3 et 4 ont leur faces destinées à être appliquées sur les feuilles de verre recouvertes de matériaux 5 à la fois tampon thermique et mécanique.

Avantageusement elles sont refroidies par exemple par circulation d'eau ou autre en leur sein, afin d'éviter qu'elles ne s'échauffent trop et ne se déforment en cas d'usage à cadence élevée.

Avantageusement également pour éviter les déformations sous l'effet de la chaleur et en particulier du gradient thermique important existant entre la surface des plaques de refroidissement 3 et 4 et leur coeur refroidi, lesdites plaques de refroidissement sont en un matériau qui se déforme peu à la chaleur. Ainsi conviennent plus spécialement les matériaux pour lesquels le rapport du coefficient de dilatation linéaire à la conductivité thermique est faible, ainsi par exemple le graphite.

Ce tampon 5 recouvrant les plaques de refroidissement 3 et 4 est formé d'au moins une couche 8 (voir fig. 2), directement en contact avec le verre, qui est en un matériau poreux présentant une résistance thermique c'est à dire un rapport entre l'épaisseur dudit matériau et sa conductivité thermique, comprise entre environ $0,25.10^{-3}$ et $2,5.10^{-3}$ $M^2.KW^{-1}$ lorsqu'il s'agit de tremper des feuilles de verre d'épaisseur variant entre 1 et 10mm.

Un tel matériau permet de réduire le flux de chaleur entre le verre et les plaques de refroidissement 3 et 4, et il autorise des trempes satisfaisant le réglement n° 43 de l'Accord des Nations Unies concernant l'adoption de conditions uniformes d'homologation et la reconnaissance réciproque de l'homologation des équipements et pièces de véhicules à moteur. Selon ce réglement un vitrage automobile doit comporter des contraintes de trempe telles que lorsqu'il se brise à la suite d'un impact en l'un des endroits prescrits dans ce réglement, le nombre de fragments dans tout carré de 5cm x 5cm n'est pas inférieur à 40 ni supérieur à 350 (nombre porté à 400 pour des vitrages de 3, 5 mm d'épaisseur et en dessous), aucun fragment n'a plus de $3cm^2$ de surface sauf éventuellement dans une bande de 2cm de large à la périphérie du vitrage et dans un rayon de 7,5 cm autour du point d'impact et aucun fragment allongé de plus de 7,5 cm de longueur ne doit exister.

A l'intérieur de l'intervalle de résistances thermiques proposé, la résistance thermique souhaitable peut être ajustée en fonction du degré de trempe visé, la résistance devant être d'autant moins élevée que l'on souhaite une fragmentation plus fine elle peut être ajustée également en fonction de l'épaisseur du verre à tremper, ladite résistance thermique devant diminuer lorsque l'épaisseur du verre diminue pour conserver une même fragmentation.

En adoptant pour la trempe par contact, des matériaux dont la résistance est, compte tenu de l'épaisseur du verre à traiter, relativement basse ou au contraire relativement élevée, bien que comprise dans l'intervalle des résistances proposées, on peut également, si besoin est, obtenir des feuilles de verre ne satisfaisant pas le réglement 43 des Nations Unies, et ayant des niveaux de trempe élevés (fragmentation plus fine que celle requise par le réglement 43) ou au contraire des niveaux de trempe faibles (fragmentation plus grosse que celle requise par le réglement 43). De telles feuilles de verre ne sont pas utilisables en tant que vitrages simples trempés pour l'automobile, mais elles peuvent être utilisées par exemple dans le bâtiment ou comme l'un des constituants d'un vitrage feuilleté destiné à l'automobile, à des avions ou autres.

La résistance thermique adéquate peut être obtenue à partir d'un matériau poreux par exemple constitué par un assemblage ordonné ou non de fils. Les fils peuvent être de différentes natures (carbone, métal, ...), cependant pour assurer à ce tampon intercalé entre le verre et les plaques de refroidissement 3 et 4 une durée de vie importante, certains au moins des fils sont métalliques.

A la fois pour donner au matériau tampon une capacité à stocker en son sein une quantité d'air apte à lui conférer la résistance thermique souhaitée, ainsi qu'une planéité de surface qui ne risque pas d'entraîner de blessures du verre, les fils employés et en particulier les fils métalliques, sont de faible diamètre, de diamètre aussi faible que possible, de toute façon inférieur à 50 microns et de préférence inférieur à 15 microns.

La finesse des fils, la porosité du matériau, permettent audit matériau d'éviter de stocker la chaleur et d'être globalement isolant malgré la conductibilité thermique intrinsèque des fils métalliques.

La composition métallique de tout ou partie des fils procure à ces matériaux la durabilité, la tenue mécanique exigée par l'application envisagée. Ces fils sont assemblés en mèches, lesquelles ou certaines desquelles au moins sont ensuite tressées, tricotées, entrecroisées, ou frittées pour constituer le matériau désiré. Suivant des variantes, les fils sont directement frittés, tissés, tricotés, entrecroisés, sans avoir été préalablement rassemblés en mèches. L'assemblage décrit ci-dessus accroît encore la porosité du matériau et en outre améliore les capacités du matériau à se déformer et à s'adapter à des plaques de refroidissement aux formes variées.

Différents exemples de matériaux ayant la résistance thermique définie précédemment ont été testés avec succès pour tremper des feuilles de verre et éventuellement les bomber simultanément, les plaques de refroidissement présentant dans le cas d'un bombage simultané la forme désirée pour les feuilles de verre.

### EXEMPLE 1 :

\* Tissu de 0,14 mm d'épaisseur constitué de fibres d'acier inoxydable, de diamètre 12 à 14 microns, frittées. Résistance thermique $10^{-3}$ $M^2$ $KW^{-1}$.

Essayé avec succès pour la trempe et la bombage simultané de feuilles de verre de 3 mm d'épaisseur satisfaisant le règlement 43 des Nations Unies.

### EXEMPLE 2 :

\* Tissu de 0,14 mm d'épaisseur obtenu à partir de mèches tissées de fils d'acier inoxydable de 12 à 14 mm de diamètre. Résistance thermique $10^{-3}$ $M^2$ $KW^{-1}$.

Essayé avec succès pour la trempe et la bombage simultané de feuilles de verre de 3 mm d'épaisseur satisfaisant le règlement 43 des Nations Unies.

### EXEMPLE 3 :

\* Tissu obtenu à partir de mèches comportant deux types de fils d'acier inox. Résistance thermique $1,5 \times 10^{-3}$ $M^2$ $KW^{-1}$.

Essayé avec succès pour la trempe et la bombage simultané de feuilles de verre de 4 mm d'épaisseur satisfaisant le règlement 43 des Nations Unies.

### EXEMPLE 4 :

\* Tissu de 0,42 mm d'épaisseur obtenu à partir de fils d'Inconel (alliage fer-nickel-chrome à très forte teneur en nickel ; marque déposée de la société The International Nickel Company). Résistance thermique $2,1 \times 10^{-3}$ $M^{-2}$ $KW^{-1}$.

Essayé pour le trempe et le bombage simultané de feuilles de verre de 3 ou 4 mm d'épaisseur. Le degré de trempe obtenu ne satisfait pas le règlement 43, la fragmentation étant trop faible. Ces verres de 3 ou 4 mm d'épaisseur ayant un niveau de trempe trop faible ne peuvent pas être utilisés, en verre simple dans l'automobile. Pour être utilisés dans l'automobile, ils doivent être intégrés dans un vitrage feuilleté.

Ce même tissu permet de tremper dans les conditions du règlement 43, des feuilles de verre de 6 ou de 8 mm d'épaisseur. Une même fragmentation peut être obtenue sur des verres de 6 ou des verres de 8 mm d'épaisseur en modifiant la pression des plaques de refroidissement sur le verre lors de la trempe, donc en écrasant plus ou moins le tissu, l'ecrasement du tissu devant être plus faible pour tremper avec un même degré le verre le moins épais.

### EXEMPLE 5 :

\* Tissu de 0,08 mm d'épaisseur tissé à partir d'un fil unique de bronze de 0,04 mm de diamètre. Résistance thermique $0,25 \times 10^{-3}$ $M^2$ $KW^{-1}$.

Essayé avec succès pour le trempe et le bombage simultané de feuilles de verre de 1,6 mm d'épaisseur satisfaisant le règlement 43. A permis également "d'hyper tremper", c'est-à-dire avec une fragmentation supérieure à celle définie dans le règlement 43, des feuilles de verre de 3 Ou 4 mm d'épaisseur.

### EXEMPLE 6 :

\* Tissu de 0,08 mm d'épaisseur tissé à partir d'un fil unique d'acier inox de 0,04 mm de diamètre. Résistance thermique $0,25 \times 10^{-3}$ $M^2$ $KW^{-1}$.

Essayé avec succès pour la trempe de verre de 1,6 mm d'épaisseur satisfaisant le règlement 43. "Hyper trempe" de feuilles de verre de 3 et 4 mm d'épaisseur.

### EXEMPLE 7 :

\* Tissu de 0,45 mm d'épaisseur obtenu par tissage de mèches de fils d'acier inox. Résistance thermique $2,1 \times 10^{-3}$ $M^2$ $KW^{-1}$.

Trempe selon le règlement 43 des verres de 6, 8 et 10 mm d'épaisseur. Renforcement (trempe avec fragmentation inférieure à celle définie par le règlement 43) de feuilles de verre de 3 et 4 mm d'épaisseur.

Comme déjà évoqué dans les exemples, différentes résistances thermiques peuvent être obtenues à partir d'un même tissu en variant l'écrasement dudit tissu ayant des caractéristiques thermiques différentes du tissu disposé partout ailleurs sur les plaques de refroidissement.

Dans tous les exemples ci-dessus, la longevité du tissu est telle qu'une utilisation industrielle ne pose pas de problème. Un tissu fait à partir de deux types de mèches ou fils, les uns métalliques, les autres en carbone donne cependant également satisfaction.

Avantageusement, pour l'application trempe et éventuellement bombage par contact, la couche de matériau à résistance thermique comprise entre 0,25 et 2,5 $M^2.KW^{-1}$ est associée à une sous couche 9 (voir figure 2) d'un autre matériau jouant essentiellement le rôle de tampon mécanique.

En effet, les contraintes de résistance thermique ainsi que les contraintes de planéité, de finesse des fils imposées au matériau de la couche 8 font que le rôle de tampon mécanique ne peut le plus souvent pas être rempli intégralement et de façon optimale par ladite couche 8.

C'est pourquoi il est souhaitable de disposer d'une sous couche 9 complémentaire.

Comme visible sur la figure 2, les plaques de refroidissement 3 et 4 reçoivent donc un revêtement 5 sur leurs faces destinées à venir en contact avec les feuilles de verre à tremper et éventuellement bomber, ce revêtement 5 étant avantageusement constitué d'une couche 8 jouant essentiellement le rôle de tampon thermique, celle décrite précédemment, et d'une sous couche 9 jouant essentiellement le rôle de tampon mécanique, décrite ci-après.

Ayant ainsi en général deux couches superposées pour former le tampon 5 il est plus facile de choisir pour chacune de ces couches les matériaux aptes à remplir de façon optimale les rôles de tampon mécanique d'une part, de tampon thermique d'autre part.

Le matériau de la sous couche 9 jouant essentiellement le rôle de tampon mécanique doit posséder une élasticité et une compressibilité suffisantes pour compenser les imperfections de l'usinage et de l'ajustage des plaques de refroidissement 3 et 4. Cette elasticité ne doit toutefois pas s'accompagner de trop de mollesse, car en cas de casse intempestive du verre, le matériau se trouverait marqué et aurait une influence néfaste sur la qualité optique des feuilles de verre trempées ultérieurement. Bien entendu il possède aussi des capacités de tenue à la chaleur, d'inertie chimique vis à vis du verre et de déformabilité.

Conviendront ainsi les matériaux pour lesquels la variation d'épaisseur est comprise entre 0,01 et 0,5 mm pour des pressions subies s'échelonnant de 0,1 à 10 bars. Dans les cas courants où les tolérances d'usinage des plaques de refroidissement sont de l'ordre de 0,05 à 0,1 mm et où les incertitudes de réglage sont de 0,05 à 0,10mm, de préférence conviendront comme matériaux ceux dont la variation d'épaisseur s'échelonne entre 0,05 mm et 0,2 mm pour des pressions variant de 0,1 à 10 bars. Autrement dit, conviendront les matériaux ayant un module d'Young compris entre 0,1 MPa et 100 MPa et plus fréquemment pour répondre aux cas courants, conviendront les matériaux dont le module d'Young est entre 0,5 et 20 MPa.

Par ailleurs, cette sous-couche ne doit pas occulter les caractéristiques thermiques du matériau jouant essentiellement le rôle de tampon thermique, à savoir le matériau de la couche 8. En particulier cette sous-couche ne doit pas constituer une résistance thermique substancielle supplémentaire, opposée au flux thermique provenant des plaques de refroidissement.

Ainsi la sous-couche 9 doit posséder une conductibilité thermique importante dans la direction perpendiculaire à celle des feuilles de verre à tremper et à celle des plaques de refroidissement 3 et 4. Cette conductibilité thermique doit être au moins de l'ordre de 2 W.M$^{-1}$.°C$^{-1}$ et de préférence d'au moins 4, ce qui conduit à une résistance thermique substanciellement plus faible que celle du matériau 8 jouant le rôle de tampon thermique (au moins 2 fois plus faible et de préférence au moins une dizaine de fois plus faible).

Avantageusement, la conductibilité thermique dans la direction longitudinale, c'est-à-dire dans la direction tangente aux plaques de refroidissement est importante pour permettre l'évacuation des calories extraites du verre.

Ainsi convient un matériau vendu sous la dénomination "PAPYEX" par la société Carbone Lorraine (marques déposées).

Ce matériau est formé de graphite expansé, il est vendu en feuilles, il a une structure anisotrope telle que la conductibilité dans le plan de la feuille, c'est-à-dire dans la direction tangente à celle des plaques de refroidissement est importante, plus importante que celle dans la direction perpendiculaire, au moins 10 fois plus importante.

Ainsi ces conductibilités sont respectivement de 4 et de 160 W.M$^{-1}$.°C$^{-1}$ pour l'échantillon testé. Ce matériau est employé dans des épaisseurs allant de 0,2 mm à 4 mm et de préférence de 0,5 à 2,5 mm.

La couche 8 et la sous-couche 9 peuvent être seulement accolées et fixées sur les plaques 3 et 4, ou avantageusement collées pour éviter toute poche d'air.

L'obtention de vitrages trempées ayant localement au moins une zone à niveau de trempe différent peut aussi être obtenue en prévoyant une sous-couche ayant localement en au moins une zone des propriétés différentes de celles du reste de la surface.

## Revendications

1. Installation de trempe et éventuellement de bombage simultané par contact de feuilles de verre de 1 à 10 mm d'épaisseur dans laquelle les plaques de refroidissement (3, 4) sont recouvertes d'un tampon (5), **caractérisée en ce qu'**au moins la surface du tampon (5), directement en contact avec le verre, est formée d'une couche (8) présentant une résistance thermique comprise entre environ 0,25x10$^{-3}$ et 10$^{-2}$ M$^2$ KW$^{-1}$, faite de fils dont le diamètre est inférieur à 50 microns et de préférence inférieur à 15 microns et dont certains au moins sont métalliques, et les autres, le cas échéant sont des fils de carbone.

2. Installation selon la revendication 1, **caractérisée en ce que** ladite couche (8) présente une résistance thermique comprise entre 0,25x10$^{-3}$ et 2,5x10$^{-3}$ M$^2$ KW$^{-1}$.

3. Installation selon l'une des revendications précédentes, **caractérisée en ce** que lesdits fils sont tressés, tissés, tricotés, frittés, entrecroisés ou disposés en mèches, elles-mêmes tressées, tissées, tricotées, entrecroisées ou frittées.

4. Installation selon l'une des revendications précédentes, **caractérisée en ce** que la résistance thermique de ladite couche (8) est amenée à la valeur désirée au cours de la trempe par contact en ajustant la pression d'application des plaques de refroidissement (3, 4) contre les feuilles de verre.

5. Installation selon l'une des revendications précédentes, **caractérisée en ce** que le tampon (5) comporte une sous-couche (9) d'un tampon mécanique ayant un module d'Young compris entre 0,1 MPa et 100 MPa et de préférence entre 0,5 et 20 MPa.

6. Installation selon la revendication 5, **caractérisée en ce que** ladite sous-couche (9) possède, dans la direction perpendiculaire à celle des plaques de refroidissement (3, 4), une conductibilité thermique supérieure à 2 WM$^{-1}$°C$^{-1}$ et de préférence de l'ordre de 4 WM$^{-1}$°C$^{-1}$, autrement dit une résistance thermique subtantiellement plus faible que celle de la couche (8).

7. Installation selon la revendication 6, **caractérisée en ce que** ladite sous-couche (9) possède une structure anisotropique lui conférant des propriétés de conductibilité thermique plus élevée dans la direction tangente aux plaques de refroidissement (3, 4) notamment de l'ordre d'au moins 10 fois supérieure à la conductibilité dans l'autre direction.

8. Installation selon la revendication 7, **caractérisée en ce que** ladite sous-couche (9) est en graphite expansé, et est employée sous des épaisseurs de 0,2 à 4 mm, de préférence de 0,5 à 2,5 mm.

9. Installation selon l'une des revendications précédentes, **caractérisée en** ce que les plaques de refroidissement (3, 4) sont en un matériau à faible valeur du rapport coefficient de dilatation linéaire sur conductivité thermique, notamment du graphite.

10. Application de l'installation selon l'une des revendications précédentes à la trempe de feuilles de verre en vue de leur utilisation en tant que vitrages automobiles, satisfaisant le règlement 43 des nations Unies.

**Patentansprüche**

1. Anlage zum Vorspannen und ggf. gleichzeitigem Biegen durch Kontakt von Glasscheiben mit einer Stärke von 1 bis 10 mm, bei der die Kühlplatten (3, 4) mit einem Puffer (5) bedeckt sind, **dadurch gekennzeichnet, daß** wenigstens die Oberfläche des Puffers (5), die in direktem Kontakt mit dem Glas gelangt, aus einer Schicht (8) gebildet ist, deren Wärmewiderstand zwischen etwa 0,25 x 10$^{-3}$ und 10$^{-2}$ M$^2$ KW$^{-1}$ liegt, und die aus Fasern hergestellt ist, deren Durchmesser unter 50 Mikrometer und vorzugszweise unter 15 Mikrometer liegt und von denen wenistens einige metallisch und die anderen gegebenenfalls Kohlenstoffasern sind.

2. Anlage nach Anspruch 1, **dadurch gekennzeichnet, daß** die Schicht (8) einen Wärmewiderstand zwischen 0,25 x 10$^{-3}$ und 2,5 x 10$^{-3}$ M$^2$ KW$^{-1}$ hat.

3. Anlage nach einem der vorhergehenden Ansprüche, **dadurch gekennzeichnet, daß** die Fasern geflochten, gewebt, gewirkt, gefrittet, miteinander verkreuzt oder in Strängen angeordnet sind, die selbst geflochten, gewebt, gewirkt, miteinander verkreuzt oder gefrittet sind.

4. Anlage nach einem der vorhergehenden Ansprüche, **dadurch gekennzeichnet, daß** der Wärmewiderstand der Schicht (8) während des Kontakt-Vorspannens dadurch auf den gewünschten Wert gebracht wird, daß der bei der Anwendung der Kühlplatten (3, 4) auf die Glasscheiben ausgeübte Druck geregelt wird.

5. Anlage nach einem der vorhergehenden Ansprüche, **dadurch gekennzeichnet, daß** der Puffer (5) eine Unterlage (9) aus einem mechanischen Pufferelement hat, dessen Youngsches Modul zwischen 0,1 MPa und 100 MPa und vorzugsweise zwischen 0,5 und 20 MPa liegt.

6. Anlage nach Anspruch 5, **dadurch gekennzeichnet, daß** die Unterlage (9) in der zur Richtung der Kühlplatten (3, 4) senkrechten Richtung eine Wärmeleitfähigkeit, die über 2 WM$^{-1}$°C$^{-1}$ und vorzugsweise in der Größe von 4 WM$^{-1}$°C$^{-1}$ liegt, mit anderen Worten einen Wärmewiderstand aufweist, der wesentlich geringer ist als der der Schicht (8).

7. Anlage nach Anspruch 6, **dadurch gekennzeichnet, daß** die Unterlage (9) eine anisotropische Struktur hat, die ihr erhöhte Wärmeleiteigenschaften in tangentialer Richtung zu den Kühlplatten (3, 4), nämlich in größenordnungsmäßig wenigstens 10 x höher als die Leitfähigkeit in der anderen Richtung, verleiht.

8. Anlage nach Anspruch 7, **dadurch gekennzeichnet, daß** die Unterlage (9) aus expandiertem Graphit besteht und in Dicken von 0,2 bis 4 mm, vorzugsweise 0,5 bis 2,5 mm, eingesetzt wird.

9. Anlage nach einem der vorhergehendem Ansprüche, **dadurch gekennzeichnet, daß** die Kühlplatten (3, 4) aus einem Material mit einem niedrigen Wert für das Verhältnis von linearem Ausdehnungskoeffizienten zur Wärmeleitfähigkeit, insbesondere des Graphits, hergestellt sind.

10. Anwendung der Anlage nach einem der vorhergehenden Ansprüche zum Vorspannen von Glasscheiben im Hinblick auf ihre Verwendung als Scheiben für Kraftfahrzeuge, die der Regel 43 der UN genügen.

**Claims**

1. Installation for toughening and possibly also simultaneous curving by contact of glass sheets of 1 to 10 mm thickness, in which the cooling plates (3, 4) are covered with a pad (5), characterized in that at least the surface of the pad (5) directly in contact with the glass is formed of a layer (8) having a thermal resistance lying between approximately 0.25 x 10$^{-3}$ and 10$^{-2}$ M$^2$ kW$^{-1}$, made from threads having a diameter less than 50 microns and preferably less than 15 microns, and some at least of which are of metal, while the others, where applicable, are carbon threads.

2. Installation according to Claim 1, characterized in that said layer (8) has a thermal resistance lying between $0.25 \times 10^{-3}$ and $2.5 \times 10^{-3}$ M$^2$ kW$^{-1}$.

3. Installation according to one of the preceding Claims, characterized in that said threads are braided, woven, knitted, fritted, interlocked or disposed as rovings, themselves braided, woven, knitted, interlocked or fritted.

4. Installation according to one of the preceding Claims, characterized in that the thermal resistance of said layer (8) is brought to the desired value during the toughening by contact by adjusting the pressure of application of the cooling plates (3, 4) against the glass sheets.

5. Installation according to one of the preceding Claims, characterized in that the pad (5) comprises an underlying layer (9) of a mechanical pad having a Young's modulus lying between 0.1 MPa and 100 MPa and preferably between 0.5 and 20 MPa.

6. Installation according to Claim 5, characterized in that said underlying layer (9) possesses, in the direction perpendicular to that of the cooling plates (3, 4), a thermal conductivity greater than 2 W.m$^{-1}$°C$^{-1}$ and preferably of the order of 4 W.m$^{-1}$°C$^{-1}$, or in other words a thermal resistance substantially smaller than that of the layer (8).

7. Installation according to Claim 6, characterized in that said underlying layer (9) has an anisotropic structure giving it thermal conductivity properties higher in the direction tangential to the cooling plates (3, 4), notably of the order of at least 10 times greater than the conductivity in the other direction.

8. Installation according to Claim 7, characterized in that said underlying layer (9) is of expanded graphite, and is used in thicknesses of 0.2 to 4mm, preferably of 0.5 to 2.5 mm.

9. Installation according to one of the preceding Claims, characterized in that the cooling plates (3, 4) are of a material having a low ratio of coefficient of linear expansion to thermal conductivity, notably graphite.

10. Application of the installation according to one of the preceding Claims to the toughening of glass sheets with the objective of their being used as automobile panes, satisfying regulation 43 of the United Nations.

FIG_1

FIG_2